# EUROPÄISCHE PATENTSCHRIFT

(11) **EP 1 855 901 B1**
(45) Veröffentlichungstag und Bekanntmachung des Hinweises auf die Patenterteilung: **21.10.2009**
(21) Anmeldenummer: 06723060.7
(22) Anmeldetag: 17.02.2006
(51) Int. Cl.: B60J 5/04

(54) **VORRICHTUNG FÜR EIN KRAFTFAHRZEUG ZUM INSASSENSCHUTZ BEI EINEM KOLLISIONSBEDINGTEN, AUF EINE KRAFTFAHRZEUGTÜR GERICHTETEN ENERGIEEINTRAG**
DEVICE FOR PROTECTING PASSENGERS IN A MOTOR VEHICLE IN THE EVENT OF AN ENERGY INPUT CAUSED BY A COLLISION AND ORIENTED TOWARDS A MOTOR VEHICLE DOOR
DISPOSITIF DE PROTECTION DES OCCUPANTS DANS UNE AUTOMOBILE EN CAS D'APPORT D'ENERGIE INDUIT PAR UNE COLLISION ET DIRIGE SUR UNE PORTE DE L'AUTOMOBILE

(30) Priorität: 09.03.2005 DE 102005011162
(43) Veröffentlichungstag der Anmeldung: 21.11.2007
(73) Patentinhaber: Fraunhofer-Gesellschaft zur Förderung der angewandten Forschung e.V., 80686 München (DE); Faurecia Innenraum Systeme GmbH, 76767 Hagenbach (DE)
(72) Erfinder: MELZ, Tobias, 64285 Darmstadt (DE); SEIPEL, Björn, 61197 Florstadt (DE); ZIMMERMAN, Eric, 34125 Kassel (DE); SIELHORST, Bernhard, Dipl.-Ing., 36205 Sontra (DE)
(74) Vertreter: Rösler, Uwe
(86) Internationale Anmeldenummer: PCT/EP2006/001472
(87) Internationale Veröffentlichungsnummer: WO 2006/094615

(56) Entgegenhaltungen:
- EP-A- 0 479 400
- WO-A-20/05061308
- GB-A- 1 453 353
- US-A- 4 307 911
- US-A- 5 221 121
- US-A- 5 895 088

## Beschreibung

### Technisches Gebiet

Die Erfindung bezieht sich auf eine Vorrichtung für ein Kraftfahrzeug zum Insassenschutz bei einem kollisionsbedingten, auf eine Kraftfahrzeugtür gerichteten Energieeintrag.

### Stand der Technik

Der Insassenschutz bei Kraftfahrzeugen gilt als eine der Hauptaufgaben bei der Konstruktion und Neuentwicklung von Kraftfahrzeugen. Ein eigenes Entwicklungsziel dient der Auslegung ausgeprägter Knautschzonen im Front- und Heckbereich, die die Fahrgastzelle bei Front- und Heckkollisionen weitgehend sicher zu schützen vermögen. Bei seitlichen Kollisionen hingegen bereitet der Insassenschutz aufgrund der kleinen zur Verfügung stehenden Deformationswege und des geringen Absorptionsvermögens der Seitenstruktur eines Kraftfahrzeuges größere Probleme. Bekannte Lösungen zur Entschärfung der bei Seitenkollisionen von Kraftfahrzeugen bestehenden Gefahr für die Insassen sehen Versteifungen der Kraftfahrzeugtür vor. So sind beispielsweise in die Kraftfahrzeugtür integrierte Profile, die in Fahrzeugquerrichtung eine hohe Steifigkeit und/oder ein hohes Energieaufnahmevermögen besitzen, bekannt. Beispielsweise geht aus der DE 196 33 637 A1 eine Fahrzeugtür mit Seitenaufprallschutz hervor, in deren Türrahmen bogenförmig ausgebildete Haltestangen vorgesehen sind, die im Kollisionsfall derart verdreht und unter Zugbelastung gleichsam der Wirkung eines Fangnetzes deformiert werden.

Eine derartige Versteifung der Seitentüren durch Vorsehen entsprechender Längsträger ist jedoch in schwerwiegenden Kollisionsfällen nicht immer ausreichend zur Sicherung der Insassen, da bei einer äußeren Krafteinwirkung auf die Seitentür diese durch den Türausschnitt der Fahrzeugkarosserie regelrecht durchgedrückt werden kann, so dass der Überlebensraum der Insassen drastisch eingeengt und die Überlebenschancen gleichsam reduziert werden.

Der Stand der Technik kennt überdies eine Reihe von Maßnahmen, die geeignet sind, auf die Seitentür einwirkende Kräfte auf die Fahrzeugkarosserie zu übertragen. Beispielsweise durch entsprechend große Überlappung zwischen Tür und Türausschnitt oder durch aus dem Rand der Tür herausragende Bolzen, die im Kollisionsfall in verstärkte Aussparungen des Türausschnittes der Kfz-Karosserie eingreifen. So geht aus der DE AS 22 15 674 eine für eine Kfz-Tür vorgesehene Verstärkungseinrichtung hervor, die im wesentlichen aus einem nach außen gewölbten Träger besteht, dessen Endabschnitte bei einer durch einen äußeren Aufprall bewirkten Deformation des Trägers in eine gestreckte Form in entsprechend stabile Ausnehmungen innerhalb des Türrahmens eindringen. Der Träger besteht vorzugsweise aus profiliertem Stahlblech, das typisch durch Umformen in entsprechende Form gebracht wird.

Zur Vermeidung eines durch die vorstehenden Maßnahmen bedingte Zunahme des Eigengewichtes des Kraftfahrzeuges wird in der DE 41 25 299 C2 eine für eine Kfz-Tür vorgesehene Verstärkungseinrichtung beschrieben, die aus Gründen der Gewichtsreduzierung aus einer, aus faserverstärktem Verbundwerkstoff gefertigten bogenförmig geformten Verstärkungsträgereinrichtung besteht. Auch in diesem Fall befindet sich die Verstärkungsvorrichtung vollständig innerhalb der Tür, die lediglich im Kollisionsfall aufgrund der einhergehenden Deformation des Verstärkungsträgers beidseitig mit den Endbereichen aus der Tür hervortritt, die ihrerseits wiederum mit stabilen Abstützflanken im Türrahmen der Kfz-Karosserie in Wirkverbindung treten.

Aus der DE 196 39 519 A1 ist eine Fahrgastzelle zu entnehmen, die als Schutzeinrichtung für die Fahrzeuginsassen im Falle einer Seitenkollision eine Querträgerkonstruktion vorsieht, die im Kollisionsfall eine starre Querverbindung zwischen der Fahrzeugtür und der Mittelskonsole herstellt, so dass der Sitzbereich vor in die Fahrgastzelle eindringenden Fahrzeugtürbereichen geschützt werden soll. Die Querträgerkonstruktion tritt lediglich im Kollisionsfall in Erscheinung, indem pyrotechnische oder pneumatische Aktoren, die ansonsten in der Sitz-, Tür- und Mittelkonsolenverkleidung integrierte, gelenkig ausgebildete Querträgerkonstruktion unter Ausbildung einer stabilen Querverbindung auslängt.

### Darstellung der Erfindung

Ausgehend von dem vorbezeichneten Stand der Technik liegt der Erfindung die Aufgabe zugrunde, ein den Insassenschutz optimierendes Sicherheitssystem anzugeben, das im Falle eines Seitenaufpralls oder einer dem Seitenaufprall ähnlichen Kollisionssituation einen erhöhten Insassenschutz zu bieten vermag. Insbesondere gilt es, das Sicherheitssystem dahingehend zu verbessern, dass die im Kollisionsfall seitlich auf eine Kraftfahrzeugtür einwirkende Deformationsenergie gezielt und sicher aus dem Bereich der Kraftfahrzeugtür weggeleitet wird, um letztlich zu verhindern, dass der Insassenraum durch kollisionsbedingte Deformationen der Kraftfahrzeugtür übergebühr reduziert wird bzw. Teile derselben bei Eindringen den Insassen verletzen.

Die Lösung der der Erfindung zugrundeliegenden Aufgabe ist im Anspruch 1 angegeben. Den Erfindungsgedanken vorteilhaft weiterbildende Merkmale sind Gegenstand der Unteransprüche sowie der Beschreibung insbesondere unter Bezugnahme auf das Ausführungsbeispiel zu entnehmen.

Die Vorrichtung für ein Kraftfahrzeug zum Insassenschutz bei einem kollisionsbedingten, seitlich auf eine Kraftfahrzeugtür gerichteten Energieeintrag, mit einer Verbindungsstruktur, die wenigstens zwei Teile, einen ersten und einen zweiten Teil aufweist, von denen der erste Teil mit der Kraftfahrzeugtür und der zweite Teil mit einem Energie absorbierenden Bereich der Kraftfahrzeugkarosserie fest verbunden ist und beide Teile über wenigstens einen gemeinsamen Fügebereich zur gezielten Ableitung wenigstens eines Teils des seitlich auf die Kraftfahrzeugtür einwirkenden Energieeintrages in den Bereich der Kraftfahrzeugkarosserie miteinander in Wirkverbindung bringbar sind, ist derart ausgebildet, dass der erste und/oder zweite Teil wenigstens teilweise einen Wandlerwerkstoff aufweist, der durch Energiezufuhr eine mechanische Zustandsänderung insbesondere in Form einer Formänderung erfährt, durch die beide Teile in Anlage zu bringen und/oder miteinander zu verriegeln sind, und dass der zweite Teil der Verbindungsstruktur in einem die Kraftfahrzeugtür unmittelbar umgebenden Kraftfahrzeugkarosseriebereich angebracht ist.

Im Unterschied zu den eingangs beschriebenen, bekannten Lösungen zur Erhöhung der Steifigkeit von Kraftfahrzeugtüren, bei denen die Kraftfahrzeugtür durchragende Seitenaufprallträger vorgesehen sind, die im Kollisionsfall seitlich, in stabilere Karosseriebereiche eindringen, um somit die auf die Kraftfahrzeugtür gerichtete Crash-Energie im Extremfall quer zur Wirkrichtung umzuleiten, gemäß der Druckschriften DE-AS 2 215 674 und DE 196 33 637 A1, sieht die angegebene Lösung wenigstens eine mit der Kraftfahrzeugtür verbundene stabile Verbindungsstruktur vor, die lediglich im Randbereich mit der Kraftfahrzeugtür lokal verbunden ist und im Kollisionsfall eine auf die Kraftfahrzeugtür stabilisierende Wirkung entfaltet, indem im Kollisionsfall der mit der Kraftfahrzeugtür verbundene erste Teil eine innige stabile Verbindung mit dem zweiten Teil der Verbindungsstruktur eingeht, die in der stabilen Rahmenkonstruktion der Karosserie eingebracht ist, die die geschlossene Kraftfahrzeugtür unmittelbar umgibt. Überraschender Weise konnte nachgewiesen werden, dass ohne Einsatz aufwendiger Seitenaufprallträgerkonstruktionen, die die Kraftfahrzeugtür üblicherweise innenliegend durchragen, lediglich durch Vorsehen einer oder mehrerer verteilt um die Kraftfahrzeugtür angebrachter Verbindungsstrukturen der seitlich auf die Kraftfahrzeugtür einwirkende Crachenergieeintrag wirkungsvoll seitlich über die Verbindungsstrukturen in den stabilen Karosserierahmenbereich umgelenkt werden kann, ohne dabei die Kraftfahrzeugtür über Gebühr zu deformieren, d.h. zumindest nicht in einem nennenswert größeren Maße als es beim Einsatz von Seitenaufprallträgern der Fall ist. So wirken insbesondere zwei, drei oder mehr entsprechend um die Kraftfahrzeugtür angebrachte Verbindungsstrukturen im Crash- und somit im Verriegelungsfall als die Kraftfahrzeugtür innerhalb des Karosserierahmens fest einspannende Mittel, wodurch die Kraftfahrzeugtür eine beträchtliche Eigensteifigkeit gewinnt und einen von Außen auf die Tür einwirkenden Energieeintrag in großem Maße abzufangen und darüber hinaus über die Verbindungsstrukturen in den stabilen Karosserierahmen abzuleiten in der Lage ist. Diese Erkenntnis trägt zu einer erheblichen Vereinfachung der für den Seitenaufprallschutz dienenden Maßnahme bei, die bei gleichen oder verbesserten Schutzeigenschaften verglichen zu bisherigen Lösungen einen entscheidenden Beitrag zur Gewichts- und Kostenreduzierung beisteuern.

Eine weitere Besonderheit der Vorrichtung ist darin zu sehen, dass durch den gezielten Einsatz eines Wandlerwerkstoffes im Bereich der Verbindungsstruktur im Idealfall zum einen die Funktionalität der Kraftfahrzeugtür unbeeinträchtigt bleibt, d.h. ein freies Öffnen und Schließen der Tür ist nach wie vor gegeben. Zum einen bewirkt eine im geschlossenen Zustand der Kraftfahrzeugtür in sich bündige Verbindungsstruktur zwischen Kraftfahrzeugtür und der Kraftfahrzeug-Karosserie eine stabile Abstützfunktion bei einem auf die Verbindungsstruktur einwirkenden Energieeintrages im Crash-Fall. Zum anderen erlaubt die wiederholbare Ent- und Verriegelung die Kopplung mit fortschrittlichen, so genannten PreCrash-, bspw. in Form optischer oder radarbasierter Sensoren, die technisch bedingt Fehlinformationen über das kritische Ausmaß der erfassten Situation liefern können und zur Absicherung der Meldung eines bevorstehenden Crashfalles einen erhöhten Aufwand zur Analyse und Bewertung erfordern, die wiederum die Reaktionszeit z.B. zur Verriegelung weiter absenken, wobei die dargelegte Reversibilität der Verriegelung mögliche Fehlinformationen tolerierbar werden läßt und resultierend eine erhöhte Gesamtsicherheit ermöglicht. Zur Realisierung der diese Anforderungen entsprechenden Verbindungsstruktur bieten sich mehrere Ausführungsformen an.

Im einfachsten Fall bietet es sich an, den ersten und zweiten Teil ganz oder teilweise aus einem Wandlerwerkstoff zu fertigen und diesen im Kollisionsfall entsprechend zu aktivieren. Grundsätzlich ist der Einsatz von einer Vielzahl unterschiedlichen, bekannten Wandlerwerkstoffen möglich, vorzugsweise Festkörper-Wandlerwerkstoffe wie Piezo-Keramiken, elektrostriktive Keramiken, Formgedächtnislegierungen (SMA). Derartige Wandlerwerkstoffe erlauben einen direkten Einsatz unter Vorgabe einer für die Verbindungsstruktur geeigneten Formgebung für die mit der Kraftfahrzeugtür sowie dem Innenbereich der Kraftfahrzeug-Karosserie verbundenen Teile.

Darüber hinaus sind jedoch auch fluide Wandlerwerkstoffe, wie beispielsweise Piezo-Polymere, elektrorheologische Fluide, Polymergele sowie magnetorheologische Fluide bekannt, die ggf. unter Vorsehung innerhalb einer geeignet gewählten Kapselung gleichfalls für den Einsatz und die Verwendung im Rahmen der Verbindungsstruktur geeignet sind.

Durch den Einsatz von Wandlerwerkstoffen innerhalb der vorgeschlagenen Verbindungsstruktur ist es möglich, die Steifigkeit sowie das Dämpfungsverhalten der im Kollisionsfall miteinander in Wirkverbindung tretenden Teile und damit des crash- und insassenrelevanten Karosserie-Sitzsystems gezielt einzustellen. Beispielsweise vermögen aus Formgedächtnismaterialien bestehende Wandlerwerkstoffe ihre Form mittels gezielter elektrischer Bestromung und damit einhergehender Erwärmung in einer vorbestimmten Weise zu verändern und zugleich auch die Materialsteifigkeit und/oder Materialdämpfungseigenschaften zu beeinflussen. Diese Eigenschaft wird in der erfindungsgemäßen Vorrichtung dadurch vorteilhaft genutzt, dass eine aus einem Formgedächtnismaterial bestehende Verbindungsstruktur, die wenigstens über einen Fügebereich zwei voneinander trennbare Teile bzw. Teilbereiche vorsieht, im Falle einer Crash-Situation durch gezielte Zuführung elektrischer Energie derart aktivierbar ist, dass beide Teile eine innige und stabile Wirkverbindung miteinander eingehen, über die die auf die Kraftfahrzeugtür einwirkende Crash-Energie längs der Verbindungsstruktur gezielt in einen stabilen, unmittelbar an die Kraftfahrzeugtür angrenzenden Karosserierahmenbereich abgeleitet wird.

Neben der Funktion der gezielten Kraftableitung längs der Verbindungsstruktur ermöglicht der eingesetzte Wandlerwerkstoff durch aktive Kontrolle einer gezielt auf den Wandlerwerkstoff einwirkenden Energieform, bspw. in Form elektrischer, thermischer o.ä. Energie, sein Steifigkeits- bzw. Dämpfungsverhalten zu verändern, unter der Maßgabe einer reduzierten physiologischen Belastung der sich im Inneren des Kraftfahrzeuges befindlichen Insassen. Die Regelung bzw. Steuerung des Steifigkeits- bzw. Dämpfungsverhaltens des eingesetzten Wandlerwerkstoffes kann nach unterschiedlichen Zielfunktionen vorgenommen werden, beispielsweise unter Maßgabe einer verminderten Nackenbeschleunigung der sich im Kraftfahrzeug befindlichen Insassen. Die Zielfunktion hängt grundsätzlich vom Alter, Gewicht, Geschlecht, Größe und der jeweiligen Sitzposition der Insassen innerhalb des Kraftfahrzeuges ab.

Selbstverständlich ist die Vorrichtung nicht nur an den Seitentüren eines Kraftfahrzeuges erfolgreich einsetzbar, vielmehr eignet sich die Verbindungsstruktur auch für die Stabilisierung einer Hecktür.

Um die Stabilitätseigenschaften von Kraftfahrzeugtüren im Crashfall noch weiter zu verbessern sieht ein weiteres Ausführungsbeispiel eine zusätzliche Verstärkung bzw. Versteifung der Kraftfahrzeugtür mit einem plattenförmigen Element oder einem Flächenbauteil vor, das an die Aussen- und/oder Innenwand der Kraftfahrzeugtür, selbstverständlich in einer von außen nicht wahrnehmbaren Weise, angebracht ist und das mit dem ersten Teil der Verbindungsstruktur verbunden ist, um auf diese Weise all jene auf das Flächenelement einwirkenden Krafteinträge im Kollisionsfall direkt über das erste Teil und mit diesem verbunden über das zweite Teil der Verbindungsstruktur in den stabilen Karosserierahmenbereich abzuleiten. Alternativ zu derartigen Flächenbauteilen kann die Steifigkeit der Tür auch durch innenliegende Trägerstrukturen erhöht werden. Im Unterschied zu den Seitenaufprallträgern, die die gesamte Kraftfahrzeugtür durchragen, sind die in dem vorstehenden Sinne vorgeschlagenen Trägerstrukturen lediglich kleinbauend ausgebildet und vermögen lediglich Segmentbereiche der Kraftfahrzeugtür zu stabilisieren, so bspw. jeweils die unteren Eckbereiche der Kraftfahrzeugtür. Weitere Einzelheiten hierzu können der Beschreibung unter Bezugnahme auf die dargestellten Ausführungsbeispiele entnommen werde.

Die zusätzlichen Flächenelemente sowie Trägerstrukturen, die der Steifigkeitverbesserung der Kraftfahrzeugtüren dienen, sollten aus robusten und möglichst leichtgewichtigen Materialien gefertigt sein, bspw. aus Leichtmetallen oder auch aus faserverstärkten Kunststoffen. Denkbar ist auch die Verwendung von Wandlerwerkstoffen, um auch diese Komponenten im Crashfall in ihrem Dämpfungs- und Steifigkeitsverhalten zu beeinflussen.

Im Falle von Seitentüren hat es sich als besonders vorteilhaft erwiesen, dass jener Teil der Verbindungsstruktur, der mit dem stabilen Karosserie-Innenbereich verbunden ist, jeweils im Bereich unterhalb des Fahrzeugsitzes fest mit der Karosserie in Wirkverbindung steht. Eine derartige Verankerung der im Innenraum der Fahrzeugkarosserie vorgesehenen Verbindungsstruktur wirkt sich in Crash-Situationen physiologisch besonders schonend auf den auf den jeweilige Fahrzeugsitz befindlichen Insassen aus, insbesondere in Fällen, in denen die Verbindungsstruktur aus den vorstehend beschriebenen Wandlerwerkstoffen mit den damit einstellbaren Dämpfungs- und Steifigkeitsverhalten gefertigt ist.

Die vorstehend beschriebene Ausbildung der Verbindungsstruktur unter Verwendung von Wandlerwerkstoffen setzt jedoch nicht notwendigerweise eine Aktivierung der jeweiligen Werkstoffe mittels extern angelegter Energie voraus, wie beispielsweise die Zufuhr elektrischer Energie, gleichfalls ist es möglich, eine vorstehend ausgebildete Verbindungsstruktur auch rein passiv in vorteilhafter Weise zu nutzen. So erlaubt eine aus Formgedächtnismaterial gefertigte Verbindungsstruktur eine fertigungs- bzw. materialtechnische Einstellung des Steifigkeits- und/oder Dämpfungsverlaufes unter entsprechender Ausnutzung der materialeigenen Eigenschaften (z.B. Superelastizität oder Materialhysterese), wodurch letztlich eine vorgebbare Anpassung des beim Seitenaufprall auf die Fahrzeug-Karosserie und letztlich auf den auf dem Fahrzeugsitz befindlichen Insassen wirkenden Energieeintrag möglich ist.

Ebenso ist eine gezielte quasistatische Einstellung der Material- bzw. Bauteileigenschaften analog zu obiger Beschreibung denkbar. Beispielsweise ist es bei Verwendung von Formgedächtnismetallen denkbar, die thermische Aktivierung für eine variable Einstellung der Materialhysterese zu nutzen.

Ferner ist es denkbar, zur Herstellung der Fügeverbindung die Crashenergie selbst zu nutzen. So kann die Crashenergie zur Verriegelung der Teile der Verbindungsstruktur genutzt werden. Ein aktives Element kann eine nachfolgende Trennung der Teile bewirken, um die Öffnung der Tür und Bergung der Insassen zu ermöglichen bzw. zu erleichtern.

Ebenso ist es denkbar, die Crashenergie zur Aktivierung des Wandlerwerkstoff zu nutzen. Im Falle eines Formgedächtnismetalls kann die mechanische Energie in thermische gewandelt werden, mittels derer dann die eigentliche Aktivierung des Formgedächtniseffekts erreicht wird.

Selbstverständlich sind darüber hinaus Ausführungsbeispiele denkbar, die komplexer ausgebildete Verbindungsstrukturen vorsehen. So ist es denkbar, den jeweils ersten und zweiten Teil der Verbindungsstruktur doppelt auszubilden, so dass eine Parallelanordnung von miteinander in Wirkverbindung tretenden ersten und zweiten Teilen möglich wird. So könnte der erste Teil als ein Rohr mit einer innen verlaufenden getrennten Stange ausgeführt sein, wobei die beiden Komponenten aus jeweils unterschiedlichen Materialien gefertigt sein können. Ebenso könnte alternativ oder in Kombination mit der vorstehenden Variante der zweite Teil eine in Längsrichtung ausgebildete Zweiteilung aufweisen, wobei ein Bereich aus einem Wandlerwerkstoff und der andere aus konventionellem Material bestehen. Die vorstehenden Überlegungen sollen zeigen, dass der Vielfalt zur Ausbildung der Verbindungsstruktur nahezu keine Grenzen gesetzt ist, um letztlich die Verbindungsstruktur unter dem Gesichtspunkt einer effektiven Ableitung bzw. Absorption der Crash-Energie aus dem Bereich der Kraftfahrzeugtür zu optimieren.

Zur weiteren Verdeutlichung der Vorrichtung zum Insassenschutz bei einem kollisionsbedingten, auf eine Kraftfahrzeugtür gerichteten Energieeintrags sei auf das nachstehend beschriebene, einzige Ausführungsbeispiel unter Bezugnahme auf die Figur verwiesen.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: schematisierte Seitenansicht eines Kraftfahrzeuges mit A-, B- und C-Säule,
- Fig. 2a, b c: schematisierte Seitenansicht einer Kraftfahrzeugvordertür mit unterschiedlichen Anbringungen von Verbindungsstrukturen.

### Wege zur Ausführung der Erfindung, gewerbliche Verwendbarkeit

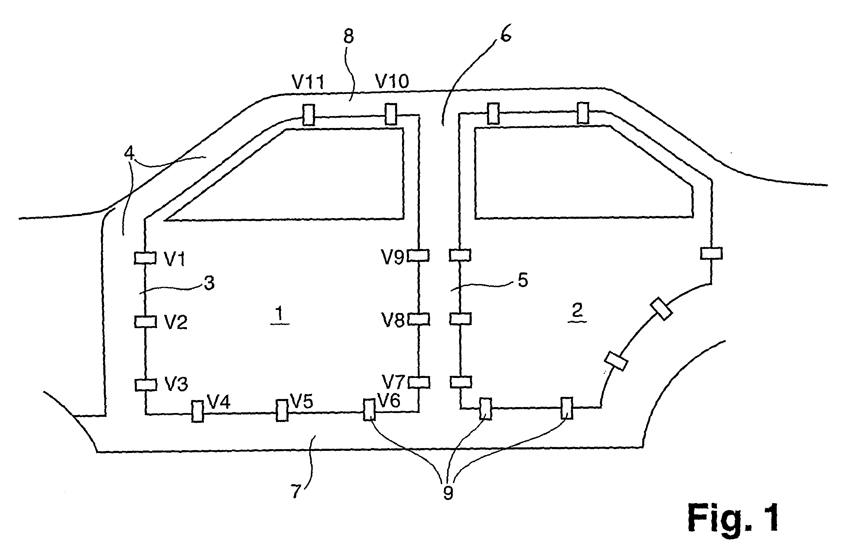

Figur 1 zeigt eine schematisierte Seitendarstellung eines Kraftfahrzeuges mit einer vorderen und hinteren Kraftfahrzeugtür 1, 2. Die vordere Kraftfahrzeugtür 1 ist in üblicher Weise längs ihrer Vorderkante 3 schwenkbar um die A-Säule 4 angelenkt. Gleichsam der vorderen KfZ-Tür 1 ist die hintere Kraftfahrzeugtür 2 längs ihrer Vorderkante 5 schwenkbar an der B-Säule 6 des Kraftfahrzeuges angelenkt. An dieser Stelle sei jedoch darauf hingewiesen, dass die im Weiteren zu beschreibenden Maßnahmen zur Erhöhung der Eigensteifigkeit der Kraftfahrzeugtüren 1, 2 unabhängig zu sehen sind von der jeweiligen Aufhängung der Kraftfahrzeugtür an der stabilen Kraftfahrzeugkarosserie, die jeweils einen die Kraftfahrzeugtür im geschlossenen Zustand vollständig umgebenden Karosserierahmenbereich vorsieht, der im Falle der Kraftfahrzeugvordertür 1 aus den Bereichen A-Säule 4, Dachkantenbereich 8, B-Säule 6 und Bodenschwellerbereich 7 besteht.

Um die Eigensteifigkeit einer Kraftfahrzeugtür zu verbessern ist lösungsgemäß vorgeschlagen worden, die Kraftfahrzeugtür 1, 2 an bestimmten lokalen Stellen mit dem stabilen Karosserierahmen im Falle eines Crash fest zu verbinden, so dass die Kraftfahrzeugtür über die sog. Verbindungsstrukturen 9 regelrecht fest in der die Kraftfahrzeugtür umgebenden stabilen Karosserierahmenstruktur eingespannt wird. Jede einzelne Verbindungsstruktur 9 besteht aus zwei Teilen, von denen ein erster Teil T1 mit der Kraftfahrzeugtür und ein zweiter Teil T2 mit dem unmittelbar der Kraftfahrzeugtür gegenüberliegenden Karosserierahmenbereich fest verbunden ist. Beide Teile T1 und T2 sind im normalen Betriebsfall voneinander entkoppelt, so dass die normale Türfunktion nicht beeinträchtigt wird. Lediglich im Kollisionsfall werden beide Teile an- oder ineinander gefügt und gehen vorzugsweise eine gegenseitige Verriegelung ein.

Zur lösbarfesten Verriegelung beider Teile T1 und T2 weist wenigstens einer der beiden Teile einen Wandlerwerkstoff auf, der durch Energiezufuhr eine mechanische Zustandsänderung in Form einer Formänderung erfährt, durch die beide Teile T1 und T2 in Anlage, vorzugsweise miteinander verriegelt werden können.

Die in Figur 1 dargestellten Stellen, an denen die Verbindungsstrukturen 9 sowohl an der vorderen als auch an der hinteren Kraftfahrzeugtür 1, 2 angebracht sind, stellen grundsätzlich alle bevorzugten Orte längs des Umfangsrandes der jeweiligen Kraftfahrzeugtür dar, an denen Verbindungsstrukturen 9 vorzusehen sind. Um eine Kraftfahrzeugtür bereits in ihrer Eigenstabilität deutlich zu verbessern, reicht es bereits aus, lediglich eine einzige Verbindungsstruktur 9, vorzugsweise im Bereich der unteren rechten Ecke der Kraftfahrzeugtür vorzusehen siehe bspw. den Ort der Verbindungsstruktur V6 oder V7. Je nach Stabilitätsanforderungen und Türdesign können eine oder mehrere derartiger Verbindungsstrukturen an den in der Figur 1 angegebenen Bereichen um die Kraftfahrzeugtür angebracht werden. Um bspw. die vordere Kraftfahrzeugtür vollständig innerhalb des die Kraftfahrzeugtür umgebenden Karosserierahmens einzuspannen, ist es ausreichend folgende Verbindungsstrukturen anzubringen V2, V5, V8, V11. Selbstverständlich sind beliebig weitere Kombinationsmöglichkeiten der vorgeschlagenen Verbindungsstrukturen V1 bis V11 sowohl die vordere als auch die hintere Kraftfahrzeugtür betreffend denkbar.

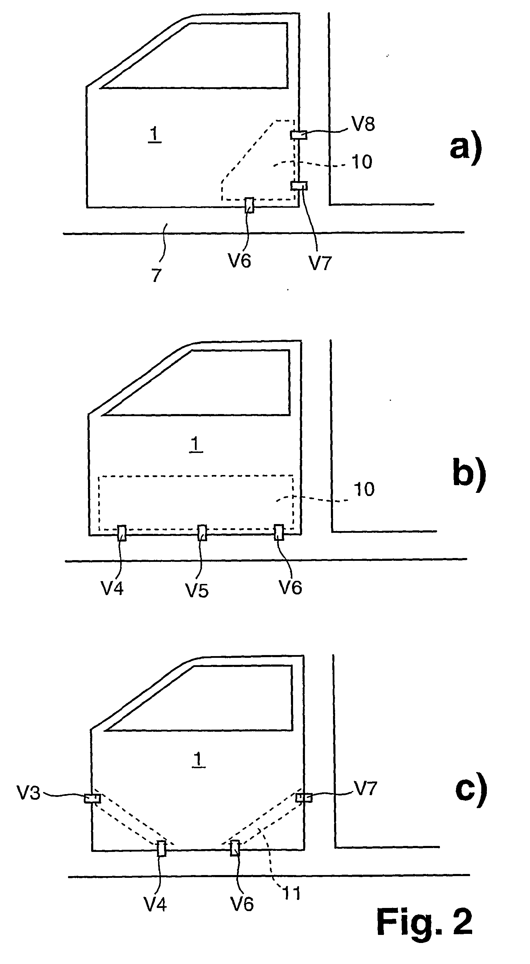

Als besonders vorteilhaft hat es sich erwiesen, die jeweiligen Verbindungsstrukturen mit einem zusätzlich an der Kraftfahrzeugtür anzubringenden stabilisierenden Element 9 gemäß Bilddarstellung in Figur 2a zu kombinieren. Figur 2a stellt gleichsam wie die Bilddarstellung in den Figuren 2b und 2c schematisierte vordere Kraftfahrzeugtüren 1 dar, die ausschnittsweise mit der B-Säule 6 und dem Bodenschwellerbereich 7 einer ansonsten nicht weiter dargestellten Kraftfahrzeugkarosserie in Wirkverbindung steht. Das stabilisierende Element 10 ist vorzugsweise als Flächenelement ausgebildet und vermag die Außenwand der Kraftfahrzeugtür innenliegend zu stabilisieren. Auch ist es denkbar das stabilisierende Flächenelement 10 als Teil der Aussen- oder Innenwand der Kfz-Tür auszubilden.

Das jeweils mit der Kraftfahrzeugtür verbundenen Teile T1 der Verbindungsstrukturen 9 ist mit eben diesen stabilisierenden Element 10 verbunden. In dem Ausführungsbeispiel gemäß Figur 2a ist der untere rechte Teilbereich der Kraftfahrzeugtür 1 mit einem Flächenelement 10 verstärkt, an dem drei Verbindungsstrukturen V6, V7 und V8 angebracht sind. In dem Ausführungsbeispiel gemäß Figur 2b erstreckt sich das Flächenelement 10 über die gesamte Längserstreckung der Kfz-Tür im unteren Bereich und ist über die Verbindungsstrukturen V4, V5 und V6 mit dem Bodenschwellerbereich 7 verbunden.

Alternativ zur Ausbildung eines Flächenelementes 10 ist es auch denkbar, die Steifigkeit der Kraftfahrzeugtür durch innenliegende Trägerstrukturen 11 zu verbessern, die im Ausführungsbeispiel gemäß Figur 2c jeweils diagonal verlaufend den vorderen und hinteren unteren Eckbereich der Kraftfahrzeugtür zu stabilisieren vermögen. Auch in diesem Fall sind die Trägerstrukturen 11 jeweils mit den Verbindungsstrukturen V3, V4 sowie V6 und V7 verbunden.

Durch Vorsehen einer Vielzahl derartiger Verbindungsstrukturen V1 - V11 ist es möglich im Crash-Fall die Verbindungssteifigkeit zwischen den jeweiligen Teilen T1 und T2 der Verbindungsstrukturen 9 mittels unterschiedlicher Ansteuerung der Wandlerwerkstoffes individuell zu wählen und dies in Abhängigkeit der jeweiligen Unfallsituation. So ist es möglich Einfluss auf die Flächensteifigkeit der Kraftfahrzeugtür zu nehmen, um einen möglichst optimalen Schutz für die Insassen zu gewährleisten. So kann die Unfallsituation mit Hilfe geeigneter Precrashsensoren erfasst werden und durch individuelle Ansteuerung der in den Verbindungsstrukturen vorhandenen Wandlerwerkstoffe eine individuell vorgebbare Steifigkeit innerhalb der KfZ-Tür generiert werden.

Auch ist es möglich, die ggf. zusätzlich vorgesehenen stabilisierenden Elemente 10 aus einem Wandlerwerkstoff oder zumindest teilweise aus einem Wandlerwerkstoff zu fertigen, um auch das Form- und Steifigkeitsverhalten dieser Komponenten gezielt zu beeinflussen. Grundsätzlich kann im Wege der Ansteuerung der Wandlerwerkstoffe Einfluss auf das Dämpfungs- und Steifigkeitsverhalten der jeweiligen Komponenten genommen werden, wodurch die Dynamik, mit der die Crashenergie auf die Kfz-Tür einwirkt, beeinflussbar ist. Auf diese Weise können die auf einen Insassen crashbedingt physiologisch einwirkenden Kraftmomente deutlich reduziert werden.

Die lösungsgemäße Vorrichtung basiert somit auf der Erkenntnis, dass die Eigenstabilität der Kraftfahrzeugtür erheblich gesteigert werden kann, wenn im Kollisionsfall die Kraftfahrzeugtür an bestimmten Punkten längs ihres Umfangsrandes starre oder intelligent steuerbare steife Verbindungen mit der die Kraftfahrzeugtür umgebenden stabilen Karosserie eingeht.

### Bezugszeichenliste

- 1: Vordere Kraftfahrzeugtür
- 2: Hintere Kraftfahrzeugtür
- 3: Vorderseitenkante der Kraftfahrzeugtür
- 4: A-Säule
- 5: Vordere Seitenkante der hinteren Kraftfahrzeugtür
- 6: B-Säule
- 7: Bodenschweller
- 8: Dachkantenbereich
- 9: Verbindungsstruktur
- 10: Stabilisierendes Element, Flächenelement
- 11: Trägerstruktur

## Patentansprüche

1. Vorrichtung für ein Kraftfahrzeug zum Insassenschutz bei einem kollisionsbedingten, seitlich auf eine Kraftfahrzeugtür (1, 2) gerichteten Energieeintrag,
mit einer Verbindungsstruktur (9), die wenigstens zwei Teile (T1, T2), einen ersten und einen zweiten Teil aufweist, von denen der erste Teil (T1) mit der Kraftfahrzeugtür und der zweite Teil (T2) mit einem Energie absorbierenden Bereich der Kraftfahrzeugkarosserie fest verbunden sind und beide Teile über wenigstens einen gemeinsamen Fügebereich zur gezielten Ableitung wenigstens eines Teils des seitlich auf die Kraftfahrzeugtür einwirkenden Energieeintrages in den Bereich der Kraftfahrzeugkarosserie miteinander in Wirkverbindung bringbar sind,
**dadurch gekennzeichnet, dass** der erste (T1) und/oder zweite Teil (T2) wenigstens teilweise einen Wandlerwerkstoff aufweist, der durch Energiezufuhr eine mechanische Zustandsänderung insbesondere in Form einer Formänderung erfährt, durch die beide Teile (T1, T2) in Anlage zu bringen und/oder miteinander zu verriegeln sind,
dass der zweite Teil (T2) der Verbindungsstruktur (9) in einem die Kraftfahrzeugtür (1, 2) unmittelbar umgebenden Kraftfahrzeugkarosseriebereich angebracht ist.

2. Vorrichtung nach Anspruch 1,
**dadurch gekennzeichnet, dass** der erste Teile (T1) der Verbindungsstruktur (9) im geschlossenen Zustand der Kraftfahrzeugtür (1, 2) dem zweiten Teil (T2) unmittelbar gegenüberliegend angeordnet ist.

3. Vorrichtung nach Anspruch 1 oder 2, **dadurch gekennzeichnet, dass** wenigstens eine Verbindungsstruktur (9) an einem der nachfolgenden diskreten Bereichen der Kraftfahrzeugtür (1, 2) sowie der die Kraftfahrzeugtür (1, 2) umgebenden Kraftfahrzeugkarosserie angeordnet ist:
längs der A-Säule (4) im unteren, mittleren oder oberen Bereich,
längs der B-Säule (6) im unteren, mittleren oder oberen Bereich,
längs des Bodenschweller (7) im vorderen, mittleren oder hinteren Bereich, und längs der Dachkante (8) im vorderen oder hinteren Bereich.

4. Vorrichtung nach einem der Ansprüche 1 bis 3,
**dadurch gekennzeichnet, dass** die Kraftfahrzeugtür (1, 2) zumindest im Bereich der Verbindungsstruktur (9) ein die Kraftfahrzeugtür stabilisierendes Element (10) aufweist.

5. Vorrichtung nach Anspruch 4,
**dadurch gekennzeichnet, dass** das die Kraftfahrzeugtür stabilisierende Element (10) ein die Außen- und/oder Innenwand der Kraftfahrzeugtür verstärkendes Flächenelement oder eine im Inneren der Kraftfahrzeugtür (1, 2) verlaufende trägerförmige Stützstruktur ist.

6. Vorrichtung nach Anspruch 4 oder 5,
**dadurch gekennzeichnet, dass** das erste Teil (T1) der Verbindungsstruktur (9) mit dem stabilisierenden Element (10) verbunden ist.

7. Vorrichtung nach einem der Ansprüche 4 bis 6,
**dadurch gekennzeichnet, dass** das stabilisierende Element (10) wenigstens in Teilbereichen aus einem Wandlerwerkstoff besteht.

8. Vorrichtung nach einem der Ansprüche 1 bis 7,
**dadurch gekennzeichnet, dass** der erste und zweite Teil (T1, T2) im Fügebereich jeweils konform zueinander ausgebildete Fügekonturen aufweisen.

9. Vorrichtung nach Anspruch 8,
**dadurch gekennzeichnet, dass** die konformen Fügekonturen beider Teile (T1, T2) derart ausgebildet sind, dass der erste Teil (T1) im Fügebereich den zweiten Teil (T2) zumindest teilweise umschließt oder in diesen teilweise eindringt.

10. Vorrichtung nach einem der Ansprüche 1 bis 9,
**dadurch gekennzeichnet, dass** beide Teile (T1, T2) der Verbindungsstruktur (9) im Fügebereich durch Schliessen der Kraftfahrzeugtün (1, 2) in gegenseitige Anlage bringbar sind.

11. Vorrichtung nach einem der Ansprüche 1 bis 10,
**dadurch gekennzeichnet, dass** beide in Anlage gebrachte Teile (T1, T2) miteinander ver- und entriegelbar sind.

12. Vorrichtung nach einem der Ansprüche 1 bis 11,
**dadurch gekennzeichnet, dass** der Wandlerwerkstoff aus wenigstens einer der nachfolgenden Werkstoffklassen besteht: Piezo-Keramik, Piezo-Polymer, elektrostriktive Keramik, elektrorheologisches Fluid, Polymergel, magnetorheologisches Fluid, Formgedächtnislegierung, Formgedächtnispolymer.

13. Vorrichtung nach einem der Ansprüche 1 bis 12,
**dadurch gekennzeichnet, dass** der erste und/oder zweite Teil (T1, T2) oder zumindest Teilbereiche des ersten und/oder zweiten Teils (T1, T2) aus einem Wandlerwerkstoff besteht, der unmittelbar vor und während des kollisionsbedingten, auf eine Kraftfahrzeugtür (1, 2) gerichteten Energieeintrag eine Formänderung derart erfährt, dass beide Teile (T1, T2) in einer lösbar feste Wirkverbindung treten.

14. Vorrichtung nach einem der Ansprüche 1 bis 13,
**dadurch gekennzeichnet, dass** eine Annäherungssensorik am oder im Kraftfahrzeug vorgesehen ist, die eine unvermeidbare Kollisionssituation erfasst und ein Signal erzeugt, durch das wenigstens Teilbereiche des Wandlerwerkstoffes aktivierbar sind.

15. Vorrichtung nach einem der Ansprüche 1 bis 14,
**dadurch gekennzeichnet, dass** die mechanischen Zustandsänderung eine das Schwingungs- und/oder das Dämpfungsverhalten des Wandierwerkstoffes beeinflussende Wirkung erzielt.

16. Vorrichtung nach einem der Ansprüche 1 bis 15,
**dadurch gekennzeichnet, dass** die Energiezufuhr für den Wandlerwerkstoff von der Crashenergie unabhängig ist.

## Claims

1. Device for a motor vehicle for protecting the occupants in the case of an input of energy caused by a collision, directed laterally onto a motor vehicle door (1, 2), with a connecting structure (9) which has at least two parts (T1, T2), a first and a second part, of which the first part (T1) is securely connected with the motor vehicle door and the second part (T2) is securely connected with an energy-absorbing region of the motor vehicle body, and both parts are able to be brought into operative connection with each other via at least one shared joint region for the selective diversion of at least a part of the input of energy acting laterally on the motor vehicle door into the region of the motor vehicle body,
**characterized in that** the first part (T1) and/or second (T2) part has at least partially a transducer material which undergoes a mechanical state change, in particular in the form of a change in shape, through the input of energy, by which both parts (T1, T2) are to be brought into abutment and/or are to be locked together, that the second part (T2) of the connecting structure (9) is mounted in a region of the motor vehicle body immediately surrounding the motor vehicle door (1, 2).

2. Device according to Claim 1,
**characterized in that** the first part (T1) of the connecting structure (9) is arranged immediately opposite the second part (T2) in the closed state of the motor vehicle door (1, 2).

3. Device according to Claim 1 or 2,
**characterized in that** at least one connecting structure (9) is arranged on one of the following discrete regions of the motor vehicle door (1, 2) and the motor vehicle body surrounding the motor vehicle door (1, 2):
along the A column (4) in the lower, middle or upper region,
along the B column (6) in the lower, middle or upper region,
along the floor threshold (7) in the front, middle or rear region, and
along the roof edge (8) in the front or rear region.

4. Device according to one of Claims 1 to 3,
**characterized in that** the motor vehicle door (1, 2) has an element (10) stabilizing the motor vehicle door, at least in the region of the connecting structure (9).

5. Device according to Claim 4,
**characterized in that** the element (10) stabilizing the motor vehicle door is a surface element reinforcing the outer and/or inner wall of the motor vehicle door, or is a beam-shaped support structure running in the interior of the motor vehicle door (1, 2).

6. Device according to Claim 4 or 5,
**characterized in that** the first part (T1) of the connecting structure (9) is connected with the stabilizing element (10).

7. Device according to one of Claims 4 to 6,
**characterized in that** the stabilizing element (10) consists, at least in partial regions, of a transducer material.

8. Device according to one of Claims 1 to 7,
**characterized in that** the first and second parts (T1, T2) have joint contours which are respectively constructed in conformity with each other in the joint region.

9. Device according to Claim 8,
**characterized in that** the conforming joint contours of the two parts (T1, T2) are constructed such that the first part (T1) in the joint region at least partially surrounds the second part (T2) or penetrates partially into it.

10. Device according to one of Claims 1 to 9,
**characterized in that** the two parts (T1, T2) of the connecting structure (9) in the joint region are able to be brought into reciprocal abutment by closing the motor vehicle door (1, 2).

11. Device according to one of Claims 1 to 10,
**characterized in that** the two parts (T1, T2) which are brought into abutment are able to be locked together and unlocked.

12. Device according to one of Claims 1 to 11,
**characterized in that** the transducer material consists of at least one of the following classes of material: piezo ceramics, piezo polymer, electrorestrictive ceramics, electrorheological fluid, polymer gel, magnetorheological fluid, shape-memory alloy, shape-memory polymer.

13. Device according to one of Claims 1 to 12,
**characterized in that** the first and/or second part (T1, T2) or at least partial regions of the first and/or second part (T1, T2) consists of a transducer material which undergoes a change in shape immediately before and during the input of energy, caused by a collision, directed onto a motor vehicle door (1, 2), such that both parts (T1, T2) enter into a detachably fixed operative connection.

14. Device according to one of Claims 1 to 13,
**characterized in that** an approach sensor is provided on or in the motor vehicle, which detects an unavoidable collision situation and generates a signal by which at least partial regions of the transducer material are able to be activated.

15. Device according to one of Claims 1 to 14,
**characterized in that** the mechanical change of state achieves an effect influencing the vibration- and/or damping behaviour of the transducer material.

16. Device according to one of Claims 1 to 15,
**characterized in that** the energy supply for the transducer material is independent of the crash energy.

## Revendications

1. Dispositif destiné à un véhicule automobile pour la protection des passagers dans le cas d'un apport d'énergie dû à une collision, orienté latéralement sur une porte de véhicule (1, 2), comprenant une structure de liaison (9) qui présente au moins deux parties (T1, T2), une première et une seconde partie, dont la première partie (T1) et la seconde partie (T2) sont liées de façon fixe respectivement à la porte du véhicule et à une zone absorbant de l'énergie de la carrosserie du véhicule et les deux parties pouvant être amenées en liaison active l'une avec l'autre au moyen d'au moins une zone d'assemblage commune pour la déviation suivie d'au moins une partie de l'apport d'énergie agissant latéralement sur la porte de véhicule dans la zone de la carrosserie du véhicule, **caractérisé en ce que** la première partie (T1) et/ou la seconde partie (T2) présente(nt) au moins en partie un matériau convertisseur, qui subit du fait de l'arrivée d'énergie une variation d'état mécanique en particulier sous la forme d'une variation de forme, par laquelle les deux parties (T1, T2) doivent être amenées en appui et/ou doivent être verrouillées l'une avec l'autre, **en ce que** la seconde partie (T2) de la structure de liaison (9) est placée dans une zone de carrosserie du véhicule entourant directement la porte de véhicule (1, 2).

2. Dispositif selon la revendication 1,
**caractérisé en ce que** la première partie (T1) de la structure de liaison (9) est disposée directement en face de la seconde partie (T2) lorsque la porte du véhicule (1, 2) est fermée.

3. Dispositif selon la revendication 1 ou 2,
**caractérisé en ce qu'**au moins une structure de liaison (9) est disposée sur l'une des zones discrètes consécutives de la porte de véhicule (1, 2) ainsi que de la carrosserie du véhicule entourant la porte de véhicule (1, 2) :
le long de la colonne A (4) dans la zone inférieure, la zone centrale ou la zone supérieure,
le long de la colonne B (6) dans la zone inférieure, la zone centrale ou la zone supérieure,
le long du bas de marche (7) dans la zone avant, la zone centrale ou la zone arrière,
le long de l'arête du toit (8) dans la zone avant ou la zone arrière.

4. Dispositif selon l'une quelconque des revendications 1 à 3,
**caractérisé en ce que** la porte de véhicule (1, 2) présente au moins dans la zone de la structure de liaison (9) un élément (10) stabilisant la porte de véhicule.

5. Dispositif selon la revendication 4,
**caractérisé en ce que** l'élément (10) stabilisant la porte de véhicule est un élément de surface renforçant la paroi extérieure et/ou la paroi intérieure de la porte de véhicule ou une structure de soutien en forme de support agencée à l'intérieur de la porte de véhicule (1, 2).

6. Dispositif selon la revendication 4 ou 5,
**caractérisé en ce que** la première partie (T1) de la structure de liaison (9) est reliée à l'élément (10) stabilisant.

7. Dispositif selon l'une quelconque des revendications 4 à 6,
**caractérisé en ce que** l'élément (10) stabilisant consiste au moins en des zones partielles à base d'un matériau convertisseur.

8. Dispositif selon l'une quelconque des revendications 1 à 7,
**caractérisé en ce que** la première et la seconde partie (T1, T2) présentent dans la zone d'assemblage à chaque fois des contours d'assemblage réalisés de façon conforme les unes par rapport aux autres.

9. Dispositif selon la revendication 8,
**caractérisé en ce que** les contours d'assemblage conformes des deux parties (T1, T2) sont réalisés de telle sorte que la première partie (T1) entoure partiellement la seconde partie (T2) dans la zone d'assemblage ou pénètre partiellement dans celle-ci.

10. Dispositif selon l'une quelconque des revendications 1 à 9,
**caractérisé en ce que** les deux parties (T1, T2) de la structure de liaison (9) doivent être amenées en appui réciproque dans la zone d'assemblage par fermeture de la porte du véhicule (1, 2).

11. Dispositif selon l'une quelconque des revendications 1 à 10, **caractérisé en ce que** les deux parties (T1, T2) amenées en appui peuvent être verrouillées et déverrouillées l'une avec l'autre.

12. Dispositif selon l'une quelconque des revendications 1 à 11,
**caractérisé en ce que** le matériau convertisseur est à base d'au moins l'une des classes de matériau suivantes : piézo-céramique, piézo-polymère, céramique électrostrictive, fluide électrorhéologique, gel polymère, fluide magnétorhéologique, alliage à mémoire de forme, polymère à mémoire de forme.

13. Dispositif selon l'une quelconque des revendications 1 à 12,
**caractérisé en ce que** la première et/ou la seconde partie (T1, T2) ou au moins des zones partielles de la première et/ou de la seconde partie (T1, T2) est à base d'un matériau convertisseur qui subit une variation de forme directement avant et pendant l'apport d'énergie dû à la collision, orienté vers une porte de véhicule (1, 2), de telle sorte que les deux parties (T1, T2) entrent dans une liaison active fixe, mais amovible.

14. Dispositif selon l'une quelconque des revendications 1 à 13,
**caractérisé en ce qu'**un capteur de proximité est prévu sur ou dans le véhicule, qui détecte une situation de collision inévitable et génère un signal par lequel au moins des zones partielles du matériau convertisseur peuvent être activées.

15. Dispositif selon l'une quelconque des revendications 1 à 14,
**caractérisé en ce que** la variation d'état mécanique permet d'obtenir un effet influençant le comportement aux vibrations et/ou le comportement à l'amortissement du matériau convertisseur.

16. Dispositif selon l'une quelconque des revendications 1 à 15,
**caractérisé en ce que** l'arrivée d'énergie pour le matériau convertisseur est indépendante de l'énergie de collision.
